(19) Europäisches Patentamt / European Patent Office / Office européen des brevets

(11) **EP 4 239 114 A1**

(12) **EUROPEAN PATENT APPLICATION**
published in accordance with Art. 153(4) EPC

(43) Date of publication:
06.09.2023 Bulletin 2023/36

(21) Application number: 21885985.8

(22) Date of filing: 19.10.2021

(51) International Patent Classification (IPC):
*D03D 1/02* (2006.01)    *B60R 21/235* (2006.01)

(52) Cooperative Patent Classification (CPC):
B60R 21/235; D03D 1/02

(86) International application number:
PCT/JP2021/038585

(87) International publication number:
WO 2022/091866 (05.05.2022 Gazette 2022/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.10.2020 JP 2020181514

(71) Applicant: TOYOBO CO., LTD.
Osaka-shi
Osaka 5300001 (JP)

(72) Inventor: TAKEUCHI Shuhei
Otsu-shi Shiga 520-0292 (JP)

(74) Representative: Müller-Boré & Partner
Patentanwälte PartG mbB
Friedenheimer Brücke 21
80639 München (DE)

(54) **NON-COATED POLYESTER BASE FABRIC FOR AIRBAG**

(57) An object of the present invention is to provide a polyester fabric for airbags using a polyester fiber capable of reducing costs, maintaining the mechanical characteristics as a fiber for airbags, maintaining the mechanical characteristics at high levels even after aging, and simultaneously complying with the standard of the FMVSS No. 302 flammability test. The polyester fabric for uncoated airbags according to the present invention has an acid value increase rate of 150% or less, and a solvent extraction rate of 0.1% or less.

EP 4 239 114 A1

**Description**

Technical Field

The present invention relates to a polyester fabric for airbags. More specifically, the present invention relates to a polyester fabric for airbags that maintains mechanical characteristics as a fabric for airbags at high levels even after aging.

Background Art

Airbags have been widely installed in automobiles as safety protection devices for occupants, and installed in a wide range of places, such as those for the driver seat and the front passenger seat, those for thigh protection built into passenger seats, and curtain airbags that are deployed along side windows. The volume of airbag fabrics used per vehicle is on the rise. The fabrics used in current airbags are mainly formed from polyamide fibers, which have properties suitable for the fabric for airbags, particularly nylon 6,6 fibers. However, nylon 6,6 fibers are relatively expensive and increase costs as airbags are more widely used. Thus, there is demand for fabrics formed from polyester fibers, the original yarn cost of which is lower than that of nylon 6,6 fibers.

Fabrics for airbags must maintain sufficient performance in an accelerated test for aging degradation in which the operation environment is assumed. While polyester fiber has been found to be susceptible to degradation in a hygrothermal environment, to meet this requirement, for example, Patent Literature 1 suggests a polyester fiber that aims to use a catalyst other than an antimony compound.

However, such fibers have a problem in terms of slightly poor thermal stability. Such fibers have been provided for industrial materials such as films; however, these fibers are not provided for airbags involving human lives. The examination of a fabric as an uncoated fabric for airbags has not been conducted; and polyester uncoated fabric with excellent hydrolysis resistance has not been substantially disclosed.

Citation List

Patent Literature

PTL 1: JP2002-242043A

Summary of Invention

Technical Problem

An object of the present invention is to provide, in a fabric for airbags using a polyester fiber, a polyester fiber for airbags that maintains mechanical characteristics at high levels even after aging, and simultaneously has thermal stability.

Solution to Problem

The present inventors conducted extensive research to achieve the object, and completed the present invention. Specifically, the invention is as described below.

(1) A polyester fabric for uncoated airbags, satisfying an acid value increase rate after a treatment at 121°C and a relative humidity of 100% for 24 hours of 150% or less, and complying with the standard of the flammability test for motor vehicle interiors, i.e., the standard of the FMVSS No. 302 flammability test, the acid value increase rate (AR) after the treatment at 121°C and a relative humidity of 100% for 24 hours being calculated by the following formula:

$$AR \ (\%) \ = \ AE/AI \ \times \ 100,$$

wherein

AE (eq/ton) indicates the acid value of the polyester fabric for uncoated airbags obtained after the treatment at 121°C and a relative humidity of 100% for 24 hours, and
AI (eq/ton) indicates the initial acid value of the polyester fabric for uncoated airbags.

(2) A polyester fabric for uncoated airbags, wherein the fabric has a solvent extraction rate of 0.1% or less.

(3) A polyester fabric for uncoated airbags, wherein the phosphorus catalyst concentration is 10 ppm or more.

(4) A polyester fabric for uncoated airbags, wherein the aluminum catalyst concentration is 5 ppm or more.

Advantageous Effects of Invention

According to the present invention, even a fabric using a relatively inexpensive polyester fiber can maintain performance at a high level even if it changes over time when used in an airbag, and at the same time has excellent thermal stability and complies with the flammability test standard.

Description of Embodiments

The technical idea of the present invention mainly comprises the following elements. Specifically, the acid value increase rate after a degradation treatment at 121°C and a relative humidity of 100% for 24 hours is 150% or less. The pressure at an RH environment of 100% at 121°C is 2 atm, which is a saturated vapor pressure.

The acid value increase rate (AR) after a treatment at 121°C and a relative humidity of 100% for 24 hours was defined by the following formula.

$$AR\ (\%)\ =\ AE/AI\ x\ 100$$

An oxidation increase rate (AR) of 100% indicates no change in oxidation, and an oxidation increase rate exceeding 100% indicates an increase in oxidation.

Herein, AE (eq/ton) and AI (eq/ton) respectively indicate the acid value of the polyester fabric for uncoated airbags obtained after a treatment at 121°C and a relative humidity of 100% for 24 hours, and the initial acid value of the polyester fabric for uncoated airbags.

The present inventors analyzed in detail polyester fabrics, and found that even though a polyester fabric is used, a polyester fabric having an acid value increase rate of 150% or less after a treatment at 121°C and a relative humidity of 100% for 24 hours can provide a fabric for airbags whose aging degradation is comparable to that formed of a polyamide fabric.

The acid value increase rate after a treatment at 121°C and a relative humidity of 100% for 24 hours is more preferably 140% or less. The lower limit of the acid value increase rate is not particularly limited.

In contrast, the tensile strength retention rate of the fabric after a treatment at 80°C and a relative humidity of 95% for 3000 hours, which is one of the conditions of aging degradation treatment for automobile manufacturers, is considered to be one important element that indicates resistance to aging degradation.

The present inventors analyzed polyester fabrics in detail, and found that there is a strong correlation between the tensile strength retention rate after a treatment at 80°C and a relative humidity of 95% for 3000 hours and the acid value increase rate after a treatment at 121°C and a relative humidity of 100% for 24 hours. It was confirmed that the acid value increase rate after a treatment at 121°C and a relative humidity of 100% for 24 hours can be an important indicator that indicates hydrolysis resistance.

In the present invention, the relative value of the tensile strength after treatment is defined as the tensile strength retention rate after a treatment, taking the tensile strength before the treatment to be 100%. The tensile strength retention rate after a treatment at 80°C and a relative humidity of 95% for 3000 hours is preferably 80% or more, and more preferably 90% or more.

The treatment under an environment at 121°C and a relatively humidity of 100% for 24 hours is conducted under treatment conditions commonly performed for a polyester film. The treatment performed under this environment can significantly reduce the treatment time as compared to a treatment conducted under an environment at 80°C and a relative humidity of 95% for 3000 hours.

Herein, in the present invention, to achieve an acid value increase rate after a treatment at 121°C and a relatively humidity of 100% for 24 hours of 150% or less, the following elements are mainly required. Specifically, this means using a polyester fiber that uses a catalyst other than a general-purpose antimony compound.

A catalyst other than the antimony compound is a polyester polymerization catalyst consisting of an aluminum compound and a phosphorus compound or a phenol-based compound, in particular, a phosphorus compound having a phenolic moiety in the same molecule, as cited in JP2002-242043A. The use of this catalyst makes it possible to suppress the generation of a foreign substance due to metal precipitation, which contributes to hydrolysis resistance.

An aluminum compound having a catalyst concentration of 5 ppm or more can exhibit an effect as a catalyst. The catalyst concentration of the aluminum compound is more preferably 10 ppm or more. An overly high catalyst concentration of the aluminum compound may cause the generation of a foreign substance; thus, the catalyst concentration of the aluminum compound is preferably 25 ppm or less.

A phosphorus compound having a catalyst concentration of 10 ppm or more can exhibit an effect as a catalyst. The catalyst concentration of the phosphorus compound is more preferably 20 ppm or more. An overly high catalyst concentration of the phosphorous compound may cause the generation of a foreign substance; thus, the catalyst concentration of the phosphorous compound is preferably 50 ppm or less.

However, the use of such catalysts results in slightly poor thermal stability as compared to that obtained by a polyester fiber using an antimony catalyst. Polyester fibers using such catalysts have not complied with the standard of the flammability test for motor vehicle interiors, i.e., the FMVSS No. 302 flammability test.

The present inventors have conducted extensive research and found that in order to overcome such an object, reducing the amount of residual organic matter derived from a spinning oil, i.e., reducing the solvent extraction rate, is a key factor. The solvent extraction rate of the present invention was determined based on the mass of an extraction material extracted by the test method specified in ASTM D 2257-98, as the ratio relative to the mass of the polyester fabric before treatment.

In particular, in the state in which the acid value increase rate is reduced, organic matter is likely to remain, and the solvent extraction rate cannot be reduced by a conventional method. Therefore, it has been considered difficult to achieve both flammability and a reduction in the acid value increase rate.

The present inventors analyzed in detail polyester fabrics using a polyester polymerization catalyst consisting of an aluminum compound and a phosphorus compound or a phenol-based compound, in particular, a phosphorus compound having a phenolic moiety in the same molecule, and found that when a polyester fabric has a solvent extraction rate of 0.1% or less, a polyester airbag fabric that complies with the standard of the FMVSS No. 302 (Federal Motor Vehicle Safety Standards No. 302) flammability test can be obtained. The solvent extraction rate is more preferably 0.05% or less. The lower limit of the solvent extraction rate is preferably 0.01% or more from the viewpoint of the tear strength properties of the airbag fabric.

As a strategy for attaining a solvent extraction rate of 0.1% or less, the present inventors found the following two main elements, i.e., immersing in hot water with a hot-water tank temperature of 90°C or more and then setting the vacuum pressure for suctioning water to 30 kPa or more. Although a hot-water tank has been used for the purpose of shrinkage processing of airbag fabric, the hot-water tank temperature and vacuum pressure were not determined for the purpose of controlling the solvent extraction rate. In the current detailed examination, it was found that by the suction of solvent-containing water at a high vacuum pressure subsequent to the treatment at a high hot-water tank temperature, the solvent extraction rate can be effectively reduced.

The hot-water tank temperature in fabric processing, specifically, the temperature of hot water is preferably 90°C or more, more preferably 95°C or more, and even more preferably 98°C or more. Hot water having a temperature of 90°C or more can reduce a fatty acid ester, which is a main residual component, which can lower the solvent extraction rate of a polyester fabric. The upper limit of the hot-water tank temperature is 100°C, which is the boiling temperature of water.

The present inventors conducted extensive research, and as a result found that if the vacuum pressure after the hot-water tank in fabric processing is 30 kPa or more, the solvent contained in the fiber can be reduced, which makes it possible to reduce the solvent extraction rate of the polyester fabric. The vacuum pressure is more preferably 35 kPa or more. The upper limit of the vacuum pressure is preferably 45 kPa or less from the viewpoint of spinnability in fabric processing.

The polyester fabric for airbags according to the present invention is preferably formed from polyester fibers having a total fineness of 200 to 555 dtex. Although polyester fibers tend to have reduced packageability due to their rigidity greater than that of nylon 6,6 fibers, polyester fibers having a total fineness of 200 dtex or more do not need to overly increase the weaving density and thus limit excessive increase in the binding force of warp yarn and weft yarn, making it easy for packageability in an airbag module to fall within an appropriate range. Polyester fibers having a total fineness of 555 dtex or less also make it easy to limit excessive increase in rigidity of yarn constituting the woven fabric.

The polyester fabric for airbags according to the present invention is preferably formed from polyester fibers having a single-filament fineness of 6.0 dtex or less. Polyester fibers having a single-filament fineness of 6.0 dtex or less can achieve spinnability together with packageability of airbags.

Examples of polyester fibers for use in the polyester fabric for airbags according to the present invention include polyethylene terephthalate and polybutylene terephthalate; the polyester fibers may be fibers composed of a copolymerized polyester formed by copolymerizing polyethylene terephthalate or polybutylene terephthalate with an aliphatic dicarboxylic acid such as isophthalic acid, 5-sodium sulfoisophthalic acid, or adipic acid, as an acid component.

The polyester fabric for airbags according to the present invention preferably has a weaving density of 40 threads/2.54 cm or more, and more preferably 46 threads/2.54 cm or more in both the warp direction and weft direction. A weaving density of 46 threads/2.54 cm or more can limit the loss of the fabric structure during the weaving process. Although the upper limit of the weaving density is not particularly limited, the upper limit is preferably 70 threads/2.54 cm or less due to the restriction of weft insertion in weaving.

In the present invention, the weaving density is measured in accordance with JIS L1096 (2010) 8.6.1. Specifically, a sample is placed on a flat table, and unnatural creases and crimps, as well as tension, are removed. Then, the number of threads of the warp yarn and the weft yarn for every 2.54-cm section in five different parts is counted, and the average of each yarn is calculated per unit length and determined to be the weaving density.

The polyester fabric for airbags according to the present invention has a tensile strength of preferably 500 N/cm or more, and more preferably 550 N/cm or more from the standpoint of mechanical characteristics. Although the upper limit of tensile strength is not particularly limited, the upper limit is preferably 1000 N/cm or less, and more preferably 900 N/cm or less in relation to the total fineness and tensile strength of the polyester multifilament for use, and the weaving density of the airbag fabric.

In the present invention, the tensile strength of the fabric is measured in accordance with JIS L1096 (2010) 8.14.1 A (labeled strip method). Specifically, a test sample is gripped with a tensile tester under an initial load, and a test is performed with the width of the test sample being 50 mm and the distance between the grips being 200 mm at a tension rate of 200 m/min, followed by measuring the strength (N) when the sample is cut. However, samples that are broken within a distance of 10 mm from the grip, and samples that are abnormally broken are excluded.

The typical production method of the polyester fabric for uncoated airbags of the present invention is summarized as below; however, the present invention is not limited to this method as long as the same effect as the present invention can be exhibited.

The present invention is a method for producing a polyester fabric for uncoated airbags wherein weaving is performed using a polyester multifilament yarn spun from a polymer containing an aluminum compound and a phosphorus compound, after which the yarn passes through a hot-water tank having a temperature of 90°C or more, and suction is performed at a vacuum pressure of 30 kPa or more, followed by drying.

It is preferable that "passing through a hot-water tank having a temperature of 90°C or more" and "suction at a vacuum pressure of 30 kPa" are continuously performed. Further, in the production method of the present invention, a heat-setting process treatment represented by a tenter pin can be added to the production method without issue.

The polyester fabric for uncoated airbags according to the present invention can be used as a suitable fabric performed for further coating on one or both sides, because the polyester fabric has excellent properties, such as heat resistance and mechanical strength that does not change over time. In such a case, an elastomer resin is preferable for coating resins; however, the most effective resin is a silicone-based resin. The method for applying a resin can be a conventional known method. From the standpoint of the ease of adjusting the coating amount and the effect of a mixed foreign substance (protrusion), coating by knife coating, in particular knife-on-air, is most preferable. The airbags formed from the polyester fabric for uncoated airbags according to the present invention, and airbags formed from the polyester fabric for coated airbags obtained by coating the above polyester fabric for uncoated airbags, are suitable for use in driver airbags, front-passenger airbags, curtain airbags, side airbags, knee airbags, seat airbags, and reinforcement fabrics, for example. Since the polyester fabric for uncoated airbags according to the present invention, and the polyester fabric for coated airbags obtained by further adding a coating to the polyester fabric for uncoated airbags has particularly high packageability, such a polyester fabric can be preferably used for airbags that particularly require packageability. For example, the fabric can be used for driver airbags, front-passenger airbags, curtain airbags, side airbags, and knee airbags.

Examples

The following describes the present invention in more detail with reference to Examples. However, the present invention is not limited by the following Examples, and can of course be implemented with appropriate changes to the extent that the changes conform to the purposes described above and below, all changes of which are included in the technical scope of the invention. The test methods for various performance conducted in the following Examples are as follows.

Acid Value of Polyester Fabric

0.2 g of a sample (polyester fabric) dried at 70°C for 16 hours was precisely weighed. 10 ml of benzyl alcohol and a weighed sample were added to a test tube, and the test tube was immersed in an oil bath heated to 205°C. The sample was dissolved with a magnetic stirrer while stirring the sample with a glass rod for 5 minutes.

Titration was performed using a 0.04 mol/l potassium hydroxide solution (ethanol solution). Phenol red was used as an indicator, the endpoint was set at the point where the color changed from yellow-green to light red, and the amount of carboxyl end group of the esterified reaction product was determined and expressed as the value of eq/1 ton of polyester fabric.

Weaving Density of Fabric

Measurement was performed in accordance with JIS L1096 (2010) 8.6.1. A sample was placed on a flat table, and unnatural creases and tension were removed. The number of threads of the warp yarn and the weft yarn for every 2.54-cm section in five different parts was counted, and the average was calculated per unit length and determined to be the density.

Tensile Strength and Tensile Elongation of Fabric

Measurement was performed in accordance with method A (labeled strip method) of JIS L 1096 (2010) 8.14.1. Each test sample having a width of 50 mm was gripped using a tensile testing machine under first load and tested at a tension rate of 200 m/min with a grip distance of 200 mm until the sample was broken to determine the strength (N) and the elongation (mm) at break. However, samples that are broken within a distance of 10 mm from the grip, and samples that are abnormally broken are excluded.

Total Fineness of Original Yarn

The total fineness was measured in accordance with JIS L1013 (2010) 8.3.1. More specifically, after a sample having a length of exactly 90 cm was obtained under the initial load, its absolute dry mass was weighed, and the total fineness (dtex) was calculated according to the following formula (7). The average of five measurements was defined as the total fineness.

$$F0 = 1000 \times m/0.9 \times + (100 + R0)/100 \quad \cdots \quad (7)$$

F0: corrected fineness (dtex),
L: length (m) of sample,
m: absolute dry mass (g) of sample,
R0: official regain (%).

Aluminum and Phosphorous Catalyst Concentrations

The metal concentration was determined by ICP emission spectrometry. The measuring device used was a SPECTRO BLUE TI (SPECTRO). The measurement conditions are as follows. Plasma power: 1400 W, plasma gas flow rate: 12 L/min, nebulizer gas flow rate: 1.0 L/min, auxiliary gas flow rate: 1.0 L/min.
The aluminum and phosphorus quantitative conditions are as follows. An yttrium nitrate solution is added to about 0.5 g of a sample to perform hydrolysis, and then the residue is dissolved in 1.2 N hydrochloric acid, thus measuring a sample. The aluminum quantitative conditions are as follows. After about 0.5 g of a sample was subjected to carbonization/incineration, and the residue was dissolved in 1.2 N hydrochloric acid, thus measuring a sample. The concentrations of aluminum and phosphorus (on a weight basis) obtained by this measurement are considered the aluminum and phosphorous catalyst concentrations of the present invention.

Example 1

A polyester-multifilament original yarn with a fineness of 555 dtex/144f (the cross-sectional surface of the single filament had a circular shape) was used in the warp yarn and the weft yarn spun from a polymer having an aluminum compound and a phosphorous compound. Weaving was performed in a plain weave pattern at a predetermined weaving density of 51 threads/2.54 cm in both the warp and weft with a water-jet loom. Thereafter, the fabric was passed through a hot-water shrinkage bath at 98°C without drying, suction was performed at a vacuum pressure of 35 kPa, and then the fabric was passed through a heating furnace at 160°C, thereby obtaining an uncoated fabric. Table 1 shows the production conditions and the physical properties of the obtained uncoated fabric.
In Table 1, a treatment at 121°C and a relative humidity of 100% for 24 hours is defined as 121°C 100% RH24H.

Example 2

A polyester-multifilament original yarn with a fineness of 555 dtex/144f (the cross-sectional surface of the single filament had a circular shape) was used in the warp yarn and the weft yarn spun from a polymer having an aluminum compound and a phosphorous compound. Weaving was performed in a plain weave pattern at a predetermined weaving density of 51 threads/2.54 cm in both the warp and weft with a water-jet loom. Thereafter, the fabric was passed through a hot-water shrinkage bath at 98°C without drying, suction was performed at a vacuum pressure of 40 kPa, and then the fabric was passed through a heating furnace at 160°C, thereby obtaining an uncoated fabric. Table 1 shows the production conditions and the physical properties of the obtained uncoated fabric.

Example 3

A polyester-multifilament original yarn with a fineness of 555 dtex/144f (the cross-sectional surface of the single filament had a circular shape) was used in the warp yarn and the weft yarn spun from a polymer having an aluminum compound and a phosphorous compound. Weaving was performed in a plain weave pattern at a predetermined weaving density of 51 threads/2.54 cm in both the warp and weft with a water-jet loom. Thereafter, the fabric was passed through a hot-water shrinkage bath at 90°C without drying, suction was performed at a vacuum pressure of 30 kPa, and then the fabric was passed through a heating furnace at 160°C, thereby obtaining an uncoated fabric. Table 1 shows the production conditions and the physical properties of the obtained uncoated fabric.

Example 4

A polyester-multifilament original yarn with a fineness of 470 dtex/96f (the cross-sectional surface of the single filament had a circular shape) was used in the warp yarn and the weft yarn spun from a polymer having an aluminum compound and a phosphorous compound. Weaving was performed in a plain weave pattern at a predetermined weaving density of 56 threads/2.54 cm in both the warp and weft with a water-jet loom. Thereafter, the fabric was passed through a hot-water shrinkage bath at 98°C without drying, suction was performed at a vacuum pressure of 35 kPa, and then the fabric was passed through a heating furnace at 160°C, thereby obtaining an uncoated fabric. Table 1 shows the production conditions and the physical properties of the obtained uncoated fabric.

Comparative Example 1

A polyester-multifilament original yarn with a fineness of 555 dtex/144f (the cross-sectional surface of the single filament had a circular shape) was used in the warp yarn and the weft yarn spun from a polymer having an aluminum compound and a phosphorous compound. Weaving was performed in a plain weave pattern at a predetermined weaving density of 51 threads/2.54 cm in both the warp and weft with a water-jet loom. Thereafter, the fabric was passed through a hot-water shrinkage bath at 50°C without drying, suction was performed at a vacuum pressure of 20 kPa, and then the fabric was passed through a heating furnace at 160°C, thereby obtaining an uncoated fabric. Table 1 shows the production conditions and the physical properties of the obtained uncoated fabric.

Comparative Example 2

A polyester-multifilament original yarn with a fineness of 555 dtex/144f (the cross-sectional surface of the single filament had a circular shape) was used in the warp yarn and the weft yarn spun from a polymer having an antimony compound. Weaving was performed in a plain weave pattern at a predetermined weaving density of 51 threads/2.54 cm in both the warp and weft with a water-jet loom. Thereafter, the fabric was passed through a hot-water shrinkage bath at 50°C without drying, suction was performed at a vacuum pressure of 20 kPa, and then the fabric was passed through a heating furnace at 160°C, thereby obtaining an uncoated fabric. Table 1 shows the production conditions and the physical properties of the obtained uncoated fabric.

Table 1

|  |  | Example 1 | Example 2 | Example 3 | Example 4 | Comparative Example 1 | Comparative Example 2 |
|---|---|---|---|---|---|---|---|
| Material | - | PET | PET | PET | PET | PET | PET |
| Ivp | dL/g | 1.0 | 1.0 | 1.0 | 1.0 | 1.0 | 1.0 |
| Antimony catalyst content | ppm | 0 | 0 | 0 | 0 | 0 | 180 |
| Aluminum catalyst content | ppm | 11 | 18 | 7 | 11 | 11 | 0 |

(continued)

| | | Example 1 | Example 2 | Example 3 | Example 4 | Comparative Example 1 | Comparative Example 2 |
|---|---|---|---|---|---|---|---|
| Phosphorous catalyst content | ppm | 25 | 44 | 18 | 25 | 25 | 0 |
| Original yarn fitness | dtex | 555 | 555 | 555 | 470 | 555 | 555 |
| Number of threads | threads | 144 | 144 | 144 | 96 | 144 | 144 |
| Loom | - | WJL | WJL | WJL | WJL | WJL | WJL |
| Weaving density | threads/inch | 51/51 | 51/51 | 51/51 | 56/56 | 51/51 | 51/51 |
| Hot-water tank temperature at the time of fabric processing | °C | 98 | 98 | 90 | 98 | 50 | 50 |
| Processing vacuum pressure | kPa | 35 | 40 | 30 | 35 | 20 | 20 |
| Heating furnace temperature | °C | 160 | 160 | 160 | 160 | 160 | 160 |
| Solvent extraction rate | % | 0.04 | 0.03 | 0.05 | 0.04 | 0.13 | 0.07 |
| FMVSS No. 302 flammability test | - | ○ | ○ | ○ | ○ | × | ○ |
| Acid value | eq/ton | 25 | 23 | 27 | 26 | 28 | 29 |
| 121°C 100% RH24H acid value | eq/ton | 34 | 29 | 40 | 35 | 39 | 47 |
| 121°C 100% RH24H acid value increase rate | % | 136 | 125 | 148 | 134 | 139 | 162 |
| 121°C 100% RH24H tensile strength retention rate | % | 96 | 98 | 90 | 97 | 94 | 88 |
| 80°C 95% RH3000H tensile strength retention rate | % | 90 | 95 | 80 | 89 | 88 | 76 |
| Determination of aging degradation | - | ○ | ○ | ○ | ○ | ○ | × |

Industrial Applicability

The present invention relates to a polyester fabric for airbags that maintains the mechanical characteristics as an airbag, that has high restraint performance to catch the occupant during deployment, and that maintains a high level of the performance even after the fabric undergoes changes over time. The invention will expand the use of relatively low-priced polyester airbags and thus greatly contribute to the development of the industry.

**Claims**

1. A polyester fabric for uncoated airbags, satisfying an acid value increase rate after a treatment at 121°C and a relative humidity of 100% for 24 hours of 150% or less, and complying with the standard of the flammability test for motor vehicle interiors, i.e., the standard of the FMVSS No. 302 flammability test,
the acid value increase rate (AR) after the treatment at 121°C and a relative humidity of 100% for 24 hours being calculated by the following formula:

$$AR\ (\%)\ =\ AE/AI\ x\ 100,$$

wherein

AE (eq/ton) indicates the acid value of the polyester fabric for uncoated airbags obtained after the treatment at 121°C and a relative humidity of 100% for 24 hours, and
AI (eq/ton) indicates the initial acid value of the polyester fabric for uncoated airbags.

2. The polyester fabric for uncoated airbags according to claim 1, wherein the fabric has a solvent extraction rate of 0.1% or less.

3. The polyester fabric for uncoated airbags according to claim 1 or 2, wherein the phosphorus catalyst concentration is 10 ppm or more.

4. The polyester fabric for uncoated airbags according to any one of claims 1 to 3, wherein the aluminum catalyst concentration is 5 ppm or more.

## INTERNATIONAL SEARCH REPORT

| International application No. |
| --- |
| **PCT/JP2021/038585** |

**A.    CLASSIFICATION OF SUBJECT MATTER**

*D03D 1/02*(2006.01)i; *B60R 21/235*(2006.01)i
FI:    D03D1/02; B60R21/235

According to International Patent Classification (IPC) or to both national classification and IPC

**B.    FIELDS SEARCHED**

Minimum documentation searched (classification system followed by classification symbols)

D03D1/00-27/18; B60R21/16-21/33

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2002-242043 A (TOYO BOSEKI) 28 August 2002 (2002-08-28)<br>claims, paragraph [0200] | 1-4 |
| Y | JP 7-90747 A (TORAY IND INC) 04 April 1995 (1995-04-04)<br>claims, example 5 | 1-4 |
| Y | JP 8-11660 A (TEIJIN LTD) 16 January 1996 (1996-01-16)<br>claims, paragraph [0018], examples 1, 3-5 | 1-4 |
| Y | JP 9-105047 A (TEIJIN LTD) 22 April 1997 (1997-04-22)<br>claims, example 1 | 1-4 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 November 2021** | **07 December 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/038585**

| Patent document cited in search report | | | Publication date (day/month/year) | Patent family member(s) | Publication date (day/month/year) |
|---|---|---|---|---|---|
| JP | 2002-242043 | A | 28 August 2002 | (Family: none) | |
| JP | 7-90747 | A | 04 April 1995 | (Family: none) | |
| JP | 8-11660 | A | 16 January 1996 | (Family: none) | |
| JP | 9-105047 | A | 22 April 1997 | (Family: none) | |

Form PCT/ISA/210 (patent family annex) (January 2015)

**REFERENCES CITED IN THE DESCRIPTION**

**Patent documents cited in the description**

- JP 2002242043 A